(19) Europäisches Patentamt
European Patent Office
Office européen des brevets

(11) EP 3 831 875 A1

(12) EUROPEAN PATENT APPLICATION

(43) Date of publication:
09.06.2021 Bulletin 2021/23

(51) Int Cl.:
*C08L 23/08* (2006.01) *C08K 5/00* (2006.01)

(21) Application number: 19213848.5

(22) Date of filing: 05.12.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Borealis AG**
**1220 Vienna (AT)**

(72) Inventors:
- **NILSSON, Susanne**
  **444 86 Stenungsund (SE)**
- **EFRAIMSSON, Lars**
  **444 86 Stenungsund (SE)**
- **JUNGQVIST, Jonas**
  **444 86 Stenungsund (SE)**
- **KARLSSON, Victoria**
  **444 86 Stenungsund (SE)**
- **SULTAN, Bernt-Åke**
  **444 86 Stenungsund (SE)**

(74) Representative: **Borealis AG**
**Borealis Polyolefine GmbH**
**IPR-Department**
**St.-Peter-Straße 25**
**4021 Linz (AT)**

# (54) FLAME RETARDANT POLYMER COMPOSITION

(57) The present invention relates to a flame retardant polymer composition comprising at least the following components A) 2.0 to 49.8 wt.-% based on the overall weight of the polymer composition of a copolymer comprising ethylene units and units selected from the group consisting of methyl acrylate, methyl methacrylate and mixtures thereof; B) 0.1 to 6.0 wt.-% based on the overall weight of the polymer composition of a polyethylene and/or polypropylene containing units originating from maleic acid anhydride; C) 0.1 to 5.0 wt.-% based on the overall weight of the polymer composition of a silicone fluid and/or a silicon gum; D) 50.0 to 70.0 wt.-% based on the overall weight of the polymer composition of a magnesium hydroxide; and E) 0 to 17.0 wt.-% based on the overall weight of the polymer composition of a copolymer of ethylene and a $C_4$ to $C_{10}$ alpha olefin comonomer having a density in the range of 860 kg/$m^3$ to 950 kg/$m^3$ determined according to ISO 1183; wherein the weight proportions of components A) to E) add up to 100 wt.-%. In addition, the present invention refers to a wire or cable comprising at least one layer comprising the polymer composition according to the present invention and to the use of the polyolefin composition according to the present invention as a flame retardant layer of a wire or cable.

EP 3 831 875 A1

## Description

The present invention relates to a flame retardant polymer composition and to the use of said polymer composition as a flame retardant layer of a wire or cable. In addition, the present invention refers to a wire or cable comprising at least one layer comprising the polymer composition according to the present invention.

The flame retardant demands for cables used in buildings have increased following e.g. the introduction of the "construction product directive" (CPR) within the European Union. In EN50575 the European classes for cables are defined and every country has now decided which cable class should be used for a specific building. For cables, the classes E, D, C and B2 are of interest. To pass class E a cable has to withstand a 1 kW burner for 1 minute in a vertical position (EN60332-1). Such cables are commonly used in buildings for private homes (domestic buildings). For class D, C and B2 a complete cable ladder is tested in the so-called bunch cable test (EN50399). For cables used in public buildings commonly, the cables have to pass class D or C. The most demanding class B2 is used for the most demanding installations with respect to fire safety e.g. tunnels, airport, subways etc.

Flame retardant polymer composition for wire and cable applications are already known from the prior art.

WO 2007/049090 A1 relates to cables, in particular for low-voltage electrical energy distribution or for telecommunications and to the flame-retardant compositions used therein.

EP 0 530 940 A1 refers to a flame retardant resin composition for electrical insulation and sheathing of wire and cables which has enhanced oil resistance and excellent processing characteristics, comprising (a) 100 parts by weight of a polyolefin polymer, (b) 50 to 200 parts by weight of a metal hydroxide or hydrated metal salt, (c) 3 to 20 parts by weight of a polyolefin based polymer or oligomer grafted or copolymerized with a vinyl bearing species, where polyolefin based polymer (c) differs from polyolefin polymer (a), and (d) 1 to 10 parts by weight of a silicone compound.

EP 2 275 477 A1 relates to a flame retardant polymer composition comprising (A) an ethylene copolymer comprising alkyl acrylate comonomer units, (B) uncoated aluminum hydroxide as inorganic filler, and (C) an ethylene copolymer comprising maleic anhydride units in an amount of 0.6 to 5 wt.%, an article comprising such a composition, the use of such a composition for producing a layer in a wire or cable and the use of an ethylene copolymer comprising maleic anhydride units for producing a wire or cable fulfilling the requirements of class D of the FIPEC test according to EN 50399:2007.

EP 2 072 572 A1 refers to a flame retardant polymer composition comprising (A) an ethylene copolymer comprising alkyl acrylate comonomer units, (B) coated aluminum hydroxide as filler material (C) a nanofiller to an article, in particular a wire or cable, comprising said flame retardant polymer composition, and to the use of said composition for the production of a layer of a wire or cable.

EP 2 532 707 A1 relates to a flame retardant polymer composition comprising an ethylene copolymer comprising polar groups selected from the group consisting of acrylic acids, methacrylic acids, acrylates, methacrylates, acetates and vinyl acetates; a single site catalyst prepared ethylene copolymer having a density between 0.860 and 0.910 g/cm$^3$; a halogen-free mineral filler comprising a huntite and/or a hydromagnesite and a maleic anhydride modified ethylene homo- or copolymer (D). A wire or cable comprising said flame retardant polymer composition, the use of said composition for the production of a layer, preferably a jacketing layer of a wire or cable are also described.

WO 99/05688 A1 refers to a cable, in particular for low-voltage electrical energy distribution or for telecommunications, comprising a conductor and a halogen-free flame-retardant coating wherein natural magnesium hydroxide is used as flame-retardant filler. This coating comprises (a) a crystalline propylene homopolymer or copolymer; (b) a copolymer of ethylene with at least one alpha-olefin having from 3 to 12 carbon atoms, and optionally with a diene, said copolymer (b) being characterized by a composition distribution index, defined as the weight percentage of copolymer molecules having an alpha-olefin content within 50 % of the average total molar content of alpha-olefin, greater than 45 %; and (c) natural magnesium hydroxide.

WO 2014/121804 A1 refers to halogen free thermoplastic or cross linked polymer compositions comprising a polyolefin and/or a polyolefin containing polar co-monomers and a combination of metal hydroxides and inorganic hypophosphite as a synergic, and optionally other ingredients. Molded items obtained using the polymer composition according to the present invention are useful in a wide range of injection molding and extrusion applications, especially cables.

WO 01/12708 A1 relates to a composition having improved ignition resistance. The interpolymer compositions comprise: (A) from 5 to 90 percent by weight of at least one substantially random interpolymer prepared by polymerizing ethylene and/or one or more alpha-olefin monomers with one or more vinyl or vinylidene aromatic monomers, and optionally with other polymerizable ethylenically unsaturated monomer(s); (B) from 10 to 94.9 percent by weight of at least one filler selected from ammonium polyphosphate, magnesium hydroxide, calcium hydroxide, and aluminum trihydrate; and (C) one or more components selected from the group consisting of (1) 5 to 50 percent by weight of at least one filler selected from talc, calcium carbonate, glass fibers, marble dust, cement dust, clay, feldspar, silica or glass, fumed silica, silicates, alumina, magnesium oxide, antimony oxide, zinc oxide, barium sulfate, aluminum silicate, calcium silicate, titanium oxides, glass microspheres, mica, clays, wollastonite, and chalk; (2) 0.5 to 20 percent by weight of at

least one metal borate selected from the metal borate of Group IIA, and, optionally, 0.5 to 10 percent by weight of at least one processing aid selected from the group consisting of polydimethylsiloxane, organopolysiloxanes, tartaric acid, stearic acid, zinc stearic, waxes, and high melt flow polyolefins; (3) 0.1 to 15 percent by weight of at least one initiator or at least one coupling agent selected from the group consisting of organic peroxides, silanes, titanates, zirconates, multifunctional vinyl compounds and organic azides; (4) 0.1 to 20 percent by weight of at least one hindered amine stabilizer; wherein the amounts of (A), (B) and (C) are based on the total weight of (A), (B) and (C).

WO 2005/ 023924 A1 refers to a flame retardant composition comprising (a) a first ethylene polymer; (b) a second ethylene polymer having a density less than 0.95 g/cm$^3$ and being modified with an unsaturated aliphatic diacid anhydride; (c) a flame retardant; and (d) an ultra high molecular weight polysiloxane. The invention also includes a coating prepared from the flame retardant composition as well as a wire-and-cable construction made by applying the coating over a wire or a cable.

The polymer compositions for wire and cable applications known from the prior are do not show excellent flame retardant properties and at the same time good mechanical properties. In addition, many known flame retardant polymer compositions are based on halogen compounds as flame retardant or synergists, being critical from an environmental point of view. Furthermore, the flame retardant polymer compositions known from the prior art are not easy to process and for the compositions containing aluminium trihydroxide as flame retardant the extruder output is limited.

Starting therefrom it was the objective of the present invention to overcome these deficiencies and to provide flame retardant polymer compositions having not only excellent flame retardant properties, but showing in addition good mechanical properties. In addition, it was object of the present invention to provide flame retardant compositions based on halogen-free compounds. Another object of the present invention was to provide flame-retardant polymer compositions being easy to process and allowing a high extruder output.

These objects have been solved by the flame retardant polymer composition according to claim 1 comprising at least the following components

A) 2.0 to 49.8 wt.-% based on the overall weight of the polymer composition of a copolymer comprising ethylene units and units selected from the group consisting of methyl acrylate, methyl methacrylate and mixtures thereof;

B) 0.1 to 6.0 wt.-% based on the overall weight of the polymer composition of a polyethylene and/or polypropylene containing units originating from maleic acid anhydride;

C) 0.1 to 5.0 wt.-% based on the overall weight of the polymer composition of a silicone fluid and/or a silicon gum;

D) 50.0 to 70.0 wt.-% based on the overall weight of the polymer composition of a magnesium hydroxide; and

E) 0 to 17.0 wt.-% based on the overall weight of the polymer composition of a copolymer of ethylene and a $C_4$ to $C_{10}$ alpha olefin comonomer having a density in the range of 860 kg/m$^3$ to 965 kg/m$^3$ determined according to ISO 1183;

wherein the weight proportions of components A) to E) add up to 100 wt.-%.

Advantageous embodiments of the polymer composition in accordance with the present invention are specified in the dependent claims 2 to 12.

Claim 13 refers to a wire or cable comprising the polymer composition comprising the polymer composition according to the invention and claim 14 relates to a preferred embodiment of said wire or cable.

The present invention further relates in accordance with claim 15 to the use of the polymer composition as described in claims 1 to 12 as a flame retardant layer of a wire or cable.

## Definitions

### Indications of Quantity

The polymer compositions in accordance with the present invention comprise the components A) to D) and optionally component E) and/or additives. The requirement applies here that the components A) to D) and if present component E) and/or the additives add up to 100 wt.-% in sum. This means for example in case that only components A) to D) are present these components add up to 100 wt.-%, but in case that components A) to E) are present A) to E) add up to 100 wt.-%. The fixed ranges of the indications of quantity for the individual components A) to D) and optionally component E) and/or the additives are to be understood such that an arbitrary quantity for each of the individual components can be selected within the specified ranges provided that the strict provision is satisfied that the sum of all the components A) to D) and optionally component E) and/or the additives add up to 100 wt.-%.

Throughout the present application, the particle size of a fraction of a particulate material is described by its particle size distribution. The value d, represents the diameter relative to which x % by weight of the particles have diameters less than $d_x$. The $d_{50}$ value is thus the "median particle size" at which 50 wt.-% of all particles are smaller than the indicated particle size.

Magnesium hydroxide materials which are used as component D) according to the present invention may comprise impurities like calcium oxide, silicon dioxide and iron oxide. It is preferred that the component D) comprises from 80 to 98 wt.-% magnesium hydroxide, preferably more than 85 wt.-% magnesium hydroxide, more preferably more than 90 wt.-% magnesium hydroxide and still more preferably more than 95 wt.-% magnesium hydroxide. Amount and nature of the impurities may vary depending on the source of the starting mineral.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Component A)

The polymer composition in accordance with the present invention comprises as component A) 2.0 to 49.8 wt.-% based on the overall weight of the polymer composition of a copolymer comprising ethylene units and units selected from the group consisting of methyl acrylate, methyl methacrylate and mixtures thereof. Preferred embodiments of component A) will be discussed in the following.

According to one preferred embodiment of the present invention the content of component A) in the polymer composition is in the range of 7.5 to 40.5 wt.%, preferably in the range of 15.5 to 32 wt.-% and more preferably in the range of 19.8 to 26.7 wt.-% based on the overall weight of the polymer composition.

In another preferred embodiment according to the present invention component A) is a copolymer comprising and preferably consisting of ethylene units and methyl acrylate units, preferably the content of methyl acrylate units is in the range of 10 to 35 wt.-% and preferably in the range of 20 to 30 wt.-% based on the overall weight of component A).

Still another preferred embodiment in accordance with the present invention stipulates that component A) has a density determined according to ISO 1183 in the range of 920 to 960 $kg/m^3$ and preferably in the range of 935 to 950 $kg/m^3$.

According to an additional preferred embodiment of the present invention component A) has a $MFR_2$ determined according to ISO 1133 in the range of 0.1 to 10 g/10 min, preferably in the range of 0.1 to 5 g/10 min and preferably in the range of 0.2 to 0.7 g/10 min.

In still another preferred embodiment of the present invention component A) comprise units with hydrolysable silane-groups, wherein the units with hydrolysable silane-groups are preferably represented by formula (I):

$$R^1SiR^2_qY_{3-q} \qquad (I)$$

wherein $R^1$ preferably is an ethylenically unsaturated hydrocarbyl, hydrocarbyloxy or (meth)acryloxy hydrocarbyl group, each $R^2$ preferably is independently an aliphatic saturated hydrocarbyl group, Y which may be the same or different, is preferably a hydrolysable organic group and q is 0, 1 or 2. The content of the comonomer units comprising a crosslinkable silane group is preferably 0.2 to 4 wt.-%, based on the overall weight of component A).

Suitable components which may be used as component A) according to the present invention are commercially available, for example from DuPont (USA) under the name Elvaloy® AC 1125.

Component B)

The polymer composition in accordance with the present invention comprises as component B) 0.1 to 6.0 wt.-% based on the overall weight of the polymer composition of a polyethylene and/or polypropylene containing units originating from maleic acid anhydride. In the following preferred embodiments of component B) will be discussed.

One preferred embodiment of the present invention stipulates that the the content of component B) in the polymer composition is in the range of 1.0 to 5.0 wt.%, preferably in the range of 2.0 to 4.5 wt.-% and more preferably in the range of 3.9 to 4.1 wt.-% based on the overall weight of the polymer composition.

According to another preferred embodiment in accordance with the present invention component B) is a obtained

by copolymerising and/or grafting polyethylene with maleic acid anhydride, whereby a grafted linear low density polyethylene is preferred, more preferably the content of maleic acid anhydride is in the range of 0.3 to 2.0 wt.-%.

In a further preferred embodiment of the present invention component B) has a density determined according to ISO 1183 in the range of 910 to 950 kg/m$^3$ and preferably in the range of 920 to 940 kg/m$^3$.

Still another preferred embodiment in accordance with the present invention stipulates that component B) has a $MFR_2$ determined according to ISO 1133 in the range of 0.5 to 5 g/10 min and preferably in the range of 1.5 to 2.5 g/10 min.

Suitable polyethylene and/or polypropylene containing units originating from maleic acid anhydride which may be used as component B) according to the present invention are commercially available, for example from HDC Hyundai EP Co., Ltd. under the tradename Polyglue® GE300C.

Component C)

The polymer composition in accordance with the present invention comprises as component C) 0.1 to 5.0 wt.-% based on the overall weight of the polymer composition of a silicone fluid and/or a silicon gum. Below preferred embodiments of component C) will be discussed.

According to a preferred embodiment in accordance with the present invention the content of component C) in the polymer composition is in the range of 0.5 to 4.5 wt.%, preferably in the range of 1.0 to 4 wt.-% and more preferably in the range of 1.4 to 3.1 wt.-% based on the overall weight of the polymer composition.

Still a further preferred embodiment in accordance with the present invention stipulates that component C) is a silicone fluid or silicone gum selected from the group consisting of polysiloxane, preferably polydimethylsiloxane, and siloxanes containing alkoxy or alkyl functional groups and mixtures thereof, preferably component C) is an organomodified siloxane.

According to another preferred embodiment in accordance with the present invention component C) is an organopolysiloxane polymer comprising chemically combined siloxy units. Preferably, the siloxy units are selected from the group consisting of $R_3SiO_{0.5}$, $R_2SiO$, $R^1SiO_{1.5}$, $R^1R_2SiO_{0.5}$, $RR^1SiO$, $R^1_2SiO$, $RSiO_{1.5}$ and $SiO_2$ units and mixtures thereof in which each R represents independently a saturated or unsaturated monovalent hydrocarbon substituent, and each $R^1$ represents a substituent such as R or a substituent selected from the group consisting of a hydrogen atom, hydroxyl, alkoxy, aryl, vinyl or allyl groups.

Still another preferred embodiment in accordance with the present invention stipulates that component C) is an organopolysiloxane having a viscosity of approximately 600 to $300 \cdot 10^6$ centipoise at 25°C. An example of an organopolysiloxane which has been found to be suitable is a polydimethylsiloxane having a viscosity of approximately $20.10^6$ centipoise at 25°C.

According to another preferred embodiment of the present invention component C) contains up to 50 wt-% by weight fumed silica fillers of the type commonly used to stiffen silicone rubbers.

Suitable silicone fluids and/or a silicon gums which may be used as component C) are commercially available, for example from Evonik Nutrition & Care GmbH (Germany) as Tegomer® 6264, from DuPont as DOW CORNING™ AMB-12235 MASTERBATCH or from Borealis AG (Austria) as FR4897.

Component D)

The polymer composition in accordance with the present invention comprises as component D) 50.0 to 70.0 wt.-% based on the overall weight of the polymer composition of a magnesium hydroxide. In the following preferred embodiments of component D) will be discussed.

A preferred embodiment of the present invention stipulates that the content of component D) in the polymer composition is in the range of 55.0 to 67.0 wt.-%, preferably in the range of 60.0 to 66.0 wt.-% and more preferably in the range of 62.0 to 64.0 wt.-% based on the overall weight of the polymer composition.

According to a further preferred embodiment in accordance with the present invention component D) is a ground or precipitated magnesium hydroxide and more preferably is a ground magnesium hydroxide.

Precipitated magnesium hydroxides are in general more expensive than ground magnesium hydroxides, but precipitated magnesium hydroxide types are still dominating because due to their smaller particle size and more homogeneus particle size distribution they do not significantly deterioate the mechnical properties of the polymer matrix. The specific combination of technical features according to claim 1 allows to use also ground magnesium types for obtaining good mechanical properties.

In accordance with the present invention a "ground magnesium hydroxide" is a magnesium hydroxide obtained by grinding minerals based on magnesium hydroxide, such as brucite and the like. Brucite is found in its pure form or, more often, in combination with other minerals such as calcite, aragonite, talc or magnesite, often in stratified form between silicate deposits, for instance in serpentine asbestos, in chlorite or in schists.

The mineral containing magnesium hydroxide can be ground according to the following technique. Advantageously, the mineral as obtained from the mine is first crushed, then ground, preferably repeatedly, each crushing/grinding step being followed by a sieving step. The grinding can be effected under wet or dry conditions, for example by ball-milling, optionally in the presence of grinding coadjuvants, for example polyglycols or the like.

Suitable ground magnesium hydroxides which may be used as component D) are commercially available, for example from Europiren B.V (Netherlands) under the tradename Ecopiren® 3.5C.

According to a preferred embodiment in accordance with the present invention component is used in the form of particles whose surface has been treated with at least one saturated or unsaturated fatty acid containing from 8 to 24 carbon atoms, or a metal salt thereof, such as, for example: oleic acid, palmitic acid, stearic acid, isostearic acid, lauric acid; magnesium or zinc stearate or oleate; and the like. Component D) may also be used without surface treatment.

Still more preferably component D) is a ground magnesium hydroxide having a median particle size $d_{50}$ in the range of 1.0 to 10.0 μm, preferably in the range of 2.0 to 5.0 μm and still more preferably in the range of 3.0 to 4.0 μm.

Another preferred embodiment of the present invention stipulates that component D) is a ground magnesium hydroxide surface-treated with stearic acid, preferably the content of stearic acid is 1.0 to 3.0 wt.-% and more preferably 1.5 to 2.5 wt.-% based on the weight of the ground magnesium hydroxide.

In still another preferred embodiment in accordance with the present invention component D) is a ground or precipitated magnesium hydroxide having a BET surface area in the range of 1 to 20 $m^2/g$ and preferably in the range of 5 to 12 $m^2/g$.

Component E)

The polymer composition in accordance with the present invention may comprise 0 to 17.0 wt.-% based on the overall weight of the polymer composition of a copolymer of ethylene and a $C_4$ to $C_{10}$ alpha olefin comonomer having a density in the range of 860 $kg/m^3$ to 965 $kg/m^3$ determined according to ISO 1183 as component E). Preferred embodiments of component E) will be discussed below.

According to a preferred embodiment of the present invention the content of component E) in the polymer composition is in the range of 3.0 to 16.0 wt.-%, preferably in the range of 5.0 to 10.0 wt.-% and more preferably in the range of 6.0 to 9.0 wt.-% based on the overall weight of the polymer composition.

A preferred embodiment in accordance with the present invention stipulates that component E) is a copolymer of ethylene and 1-octene; whereby said copolymer preferably has a density in the range of 870 $kg/m^3$ to 910 $kg/m^3$, preferably in the range of 870 to 900 $kg/m^3$ and more preferably in the range of 880 to 890 $kg/m^3$ measured according to ISO 1183.

In another preferred embodiment in accordance with the present invention component E) is manufactured by using a single-site catalyst and preferably is a copolymer of ethylene and 1-octene manufactured by using a single-site catalyst.

Still another preferred embodiment stipulates that the $MFR_2$ of component E) is in the range of 0.1 to 10.0 g/10 min, preferably in the range of 0.5 to 5 g/10 min, more preferably in the range of 0.5 to 3 g/10 min and still more preferably in the range of 1.0 to 3.0 g/10 min measured according to ISO 1133 at 190°C and a load of 2.16 kg, preferably component E) is a copolymer of ethylene and 1-octene having said $MFR_2$.

Is also in accordance with the present invention that a copolymer consisting of units of ethylene and 1-hexene is used as component (E). Component (E) may be also a mixture of copolymers of ethylene and 1-octene and ethylene and 1-hexene.

A preferred copolymer consisting of units of ethylene and 1-hexene has a content of 1-hexene in the range of 0.02 to 15 wt.-% and preferably in the range of 0.5 to 5.0 wt.-% based on the overall weight of component (E). Preferably the density of said copolymer of ethylene and 1-hexene is in the range of 920 $kg/m^3$ to 965 $kg/m^3$, more preferably in the range of 930 to 960 $kg/m^3$ and still more preferably in the range of 945 to 955 $kg/m^3$ measured according to ISO 1183. The $MFR_2$ of said copolymer of ethylene and 1-hexene is in the range of 2.0 to 40.0 g/10 min, preferably in the range of 3.0 to 30.0 g/10 min, more preferably in the range of 4.0 to 20.0 g/10 min and still more preferably in the range of 5.0 to 15.0 g/10 min measured according to ISO 1133 at 190°C and a load of 21.6 kg.

Copolymers of ethylene and 1-octene which may be used as component E) are commercially available, for example from Borealis AG (Austria) under the tradenames Queo 8201 or Queo 8203.

Copolymers of ethylene and 1-hexene which also may are suited as component E) are commercially available, for example from Borealis AG (Austria) under the trade names Borsafe HE3490-LS-H or Borsafe HE3493-LS-H.

Additives

The polymer composition according to the present invention may also comprise additives.

According to a preferred embodiment of the present invention the polymer composition comprises at least one additive preferably selected from the group consisting of slip agents, UV-stabiliser, antioxidants, additive carriers, nucleating agents, mica and mixtures thereof, whereby these additives preferably are present in 0.01 to 5 wt.-% and more preferably in 0.1 to 4 wt.-% based on the overall weight of the polymer composition, still more preferably the polymer composition comprises mica, more preferably in 2.5 to 3.5 wt,.% based on the overall weight of the polymer composition.

According to a further preferred embodiment according to the present invention the polymer composition comprises an antioxidant comprising a sterically hindered phenol group or aliphatic sulphur groups. Such compounds are disclosed in EP 1 254 923 A1 as particularly suitable antioxidants for stabilisation of polyolefin containing hydrolysable silane groups. Other preferred antioxidants are disclosed in WO 2005/003199 A1. Preferably, the antioxidant is present in the composition in an amount of from 0.01 to 3 wt.-%, more preferably 0.05 to 2 wt.-%, and most preferably 0.08 to 1.5 wt.% based on the overall weight of the polymer composition.

In case that the polyolefin composition of the present invention is crosslinked, it may comprise a scorch retarder. The scorch retarder may be a silane containing scorch retarder as described in EP 0 449 939 A1.If applicable, the scorch retarder may be present in the composition in an amount from 0.3 wt.-% to 5.0 wt.% based on the overall weight of the composition.

Polymer composition

As mentioned above the polymer composition according to the present invention comprises at least components A) to D) and optionally component E) and additives.

A preferred polymer composition in accordance with the present invention comprises mica, preferably from 2 to 4 wt.-% based on the overall weight of the polymer composition. The presence of mica helps to significantly increasing the char strength.

According to a preferred embodiment in accordance with the present invention the content of component A) in the polymer composition is in the range of 7.5 to 40.5 wt.%, preferably in the range of 15.5 to 32 wt.-% and more preferably in the range of 19.8 to 26.7 wt.-% based on the overall weight of the polymer composition and the content of component B) in the polymer composition is in the range of 1.0 to 5.0 wt.%, preferably in the range of 2.0 to 4.5 wt.-% and more preferably in the range of 3.9 to 4.1 wt.-% based on the overall weight of the polymer composition and the content of component C) in the polymer composition is in the range of 0.5 to 4.5 wt.%, preferably in the range of 1.0 to 4 wt.-% and more preferably in the range of 1.4 to 3.1 wt.-% based on the overall weight of the polymer composition and the content of component D) in the polymer composition is in the range of 55.0 to 67.0 wt.%, preferably in the range of 60.0 to 66.0 wt.-% and more preferably in the range of 62.0 to 64.0 wt.-% based on the overall weight of the polymer composition and the content of component E) in the polymer composition is in the range of 3.0 to 16.0 wt.%, preferably in the range of 5.0 to 10.0 wt.-% and more preferably in the range of 6.0 to 9.0 wt.-% based on the overall weight of the polymer composition.

Still another preferred embodiment of the present invention stipulates that component E) is present in the polymer composition and that the weight ratio between components A) and E) is in the range from 0.8:1 to 4.0:1, preferably in the range from 1.8:1 to 3.0:1 and more preferably in the range from 1.9:1 to 2.8:1.

A preferred polymer composition in according with the present invention comprises at least the following components:

A) 15.5 to 32.0 wt.-% and preferably 19.8 to 26.7 wt.-% based on the overall weight of the polymer composition of a copolymer comprising and preferably consisting of ethylene units and units of methyl acrylate, more preferably having a density determined according to ISO 1183 in the range of 920 to 960 kg/$m^3$ and preferably in the range of 935 to 950 kg/$m^3$ and/or a $MFR_2$ determined according to ISO 1133 in the range of 0.1 to 5 g/10 min and preferably in the range of 0.2 to 0.7 g/10 min;

B) 2.0 to 4.5 wt.-% and preferably 3.9 to 4.1 wt.-% based on the overall weight of the polymer composition of a linear low density polyethylene grafted with maleic anhydride;

C) 1.0 to 4.0 wt.-% and preferably 1.4 to 3.1 wt.-% based on the overall weight of the polymer composition of a silicone fluid and/or a silicon gum, preferably selected from the group consisting of polysiloxane, more preferably polydimethylsiloxane, and siloxanes containing alkoxy or alkyl functional groups and mixtures thereof;

D) 60.0 to 66.0 wt.-% and preferably 62.0 to 64.0 wt.-% based on the overall weight of the polymer composition of a ground magnesium hydroxide having a median particle size *dso* in the range of 1.5 to 5.0 μm and preferably in the range of 3.0 to 4.0 μm; and

E) 5.0 to 10.0 wt.-% and preferably 6.0 to 9.0 wt.-% based on the overall weight of the polymer composition of a copolymer made of ethylene and 1-octene; whereby said copolymer preferably has a density in the range of 870 to

900 kg/$m^3$ measured according to ISO 1183 and/or an $MFR_2$ in the range of 0.5 to 5 g/10 min;

wherein the weight proportions of components A) to E) add up to 100 wt.-%.

According to a preferred embodiment in accordance with the present invention the polymer composition is not containing calcium borate and zinc borate, it is further preferred that the polymer composition is free of any metal borates.

Still another preferred embodiment of the present invention stipulates that the polymer composition is free of inorganic hypophosites.

Wire or cable

Another aspect of the present invention relates to a wire or cable comprising at least one layer comprising the polymer composition in accordance with the present invention.

According to a preferred embodiment of the present invention the at least one layer obtained from the polyolefin composition of the present invention may be cross-linked.

The wire or cable may be produced by co-extrusion of the different layers onto the conducting core. Then, crosslinking is optionally performed, preferably by moisture curing in case that component (A) comprises comonomer units comprising a crosslinkable silane group, wherein the silane groups are hydrolyzed under the influence of water or steam. Moisture curing is preferably performed in a sauna or water bath at temperatures of 70 to 100°C or at ambient conditions.

The polymer composition in accordance with the present invention can be extruded around a wire or cable to form an insulating or jacketing layer or can be used as bedding compounds. The polymer compositions are then optionally crosslinked.

According to a preferred embodiment the wire or cable comprises an insulation layer, preferably comprising or consisting of a material selected from the group consisting of crosslinked or thermoplastic polyethylene, thermoplastic polypropylene or flame retardant polyolefins. Suitable flame retardant polyolefins are inter alia described in WO 2013/159942 A2. Suited thermoplastic insulations are for example disclosed in WO 2007/137711 A1 or WO 2013/1599442 A2 and are commercially available for example from Borealis AG (Austria) under the tradenames FR4802, FR4803, FR4807, FR6082, FR6083 and FR4804. Commercially available crosslinkable insulation materials are also avaialbe from Borealis AG (Austria) under the tradenames FR4850 and FR4851.

An insulation layer of a low voltage power cable may have a thickness in the range of 0.4 mm to 3.0 mm, preferably below 2.0 mm, depending on the application. Preferably, the insulation is directly coated onto the electric conductor.

All preferred aspects and embodiments as described above shall also hold for the wire or cable according to the present invention.

Use

Another aspect of the present invention relates to the use of a polyolefin composition of the present invention as a flame retardant layer of a wire or cable.

The use of the polyolefin composition of the present invention as a flame retardant layer may comprise cross-linking thereof.

All preferred aspects and embodiments as described above shall also hold for the use according to the present invention.

The invention will now be described with reference to the following non-limiting examples.

## Experimental Part

### A. Measuring methods

The following definitions of terms and determination methods apply for the above general description of the invention as well as to the below examples unless otherwise defined.

#### Melt Flow Rate (MFR)

The MFR was measured according to ISO 1133 (Davenport R-1293 from Daventest Ltd). MFR values were measured at two different loads 2.16 kg ($MFR_2$) and 21.6 kg ($MFR_{21}$) at 190°C.

**Density**

The density was measured according to ISO 1183-1 - method A (2019). Sample preparation was done by compression moulding in accordance with ISO 1872-2:2007.

**Comonomer content in component A)**

**Quantification of microstructure by NMR spectroscopy**

Quantitative nuclear-magnetic resonance (NMR) spectroscopy was used to quantify the comonomer content of the polymer.

Quantitative $^{1}H$ NMR spectra recorded in the molten-state using a Bruker Avance III 500 NMR spectrometer operating at 500.13 MHz. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed using a recycle delay of 2s {pollard04, klimke06}. A total of 16 transients were acquired per spectra.

Quantitative $^{1}H$ NMR spectra were processed, integrated and quantitative properties determined using custom spectral analysis automation programs. All chemical shifts were internally referenced to the bulk ethylene methylene signal at 1.33 ppm.

Assignment for methylacrylate (MA) incorporation {brandolini01}:

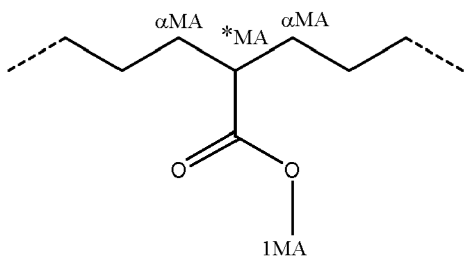

Characteristic signals resulting from incorporation of methyl acrylate, in possible various comonomer sequences, were observed. The overall methylacrylate incorporation was quantified using the integral of the signal at 3.6 ppm assigned to the 1MA site, accounting for the number of reporting nuclei per comonomer:

$$MA = I_{1MA} / 3$$

The ethylene content was quantified using the integral of the bulk aliphatic ($I_{bulk}$) signal between 0.00 - 3.00 ppm. The total ethylene content was calculated based on the bulk integral and compensating for the observed comonomer:

$$E = (1/4)*[ I_{bulk} - 3*MA]$$

The total mole fractions of methylacrylate in the polymer was calculated as:

$$fMA = MA / ( E + MA)$$

The total comonomer incorporations of methylacrylate in mole percent was calculated from the mole fraction in the standard manner:

$$MA [mol\%] = 100 * fMA$$

The total comonomer incorporations of methylacrylate in weight percent was calculated from the mole fractions in the standard manner:

$$MA\ [wt\%] = 100 * (fMA * 86.09) / ((fMA * 86.09) + ((1-fMA) * 28.05))$$

klimke06
Klimke, K., Parkinson, M., Piel, C., Kaminsky, W., Spiess, H.W., Wilhelm, M., Macromol. Chem. Phys. 2006;207:382.

parkinson07
Parkinson, M., Klimke, K., Spiess, H.W., Wilhelm, M., Macromol. Chem. Phys. 2007;208:2128.

pollard04
Pollard, M., Klimke, K., Graf, R., Spiess, H.W., Wilhelm, M., Sperber, O., Piel, C., Kaminsky, W., Macromolecules 2004;37:813.

castignolles09
Castignolles, P., Graf, R., Parkinson, M., Wilhelm, M., Gaborieau, M., Polymer 50 (2009) 2373.

brandolini01
A.J. Brandolini, D.D. Hills, "NMR spectra of polymers and polymer additives", Marcel Deker Inc., 2000.

Median Particle Size (dso)

Median particle size of metal hydroxide can be measured by laser diffraction (ISO13320), dynamic light scattering (ISO22412) or sieve analysis (ASTMD1921-06). For the metal hydroxides used in the working examples, the determination of the median particle size dso was conducted by laser diffraction. Any limitation of the claims shall refer to values obtained from laser diffraction (ISO13320).

BET surface

The Bet surface is determined in accordance with ISO 9277 (2010).

Manufacturing of tape used for determination of tensile strength and elongation at break

For determining the tensile strength and elongation at break, tapes (1.8 mm) were produced on a Collin Teach-Line E20T tape extruder with a 4.2:1, 20D compression screw with a 20 mm diameter. The temperature profile was 150/160/170°C and the screw speed was 55 rpm.

Tensile Testing

Tensile testing was executed in accordance with ISO 527-1 and ISO 527-2 using an Alwetron TCT 10 tensile tester. Ten test specimen were punched from a plaque using ISO 527-2/5A specimen and placed in a climate room with relative humidity of 50 ± 5 % at a temperature of 23°C for at least 16 hours before the test. The test specimen were placed vertically between clamps with a distance of 50 ± 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

Compression Moulding

Plaques were prepared for the limiting oxygen index and vertical burning tests with compression moulding (Collin R 1358, edition: 2/060510) according to ISO 293. The pellets were pressed in between two Mylar film sheets and positioned in a specific frame with the correct shape and dimensions (140x150x3 mm). The samples were pressed by applying 20 bar for a minute at 170°C, followed by 200 bars pressure for 5 minutes at the same temperature. The remaining compression was done at the same high pressure for 9 minutes at a cooling rate of 15°C/min. The amount of pellets used for each plaque was calculated using the density of the material with an excess of 10 wt.-%.

Limiting Oxygen Index

Limiting oxygen index (LOI) was performed by following a test method based on ASTM D 2863-87 and ISO 4589 [38]. 10 test specimens for LOI were stamped out of previously mentioned pressed plaques. The test specimens were 12.5 ± 0.5 mm long. Lines were drawn at 50 mm, measured from the top of the sticks. The samples sticks were placed vertically in a glass container with a predetermined atmosphere of oxygen and nitrogen. The samples were exposed to the predetermined atmosphere for at least 30 seconds before ignition. The sticks were ignited on the very top of the specimen during contact with an external flame for five seconds. If the stick was still burning after three minutes or if the flame had burned down past the measured 50 mm, the test had failed. Different ratios of oxygen and nitrogen were tested until the specimen passed the test and the current percentage of oxygen was recorded.

Vertical burning test

A small-scale fire test method was developed in this study to recreate real fire behaviour. In this test method vertical specimens are burned by their lower ends and thereby heating the area right above the pyrolysis zone. Ignition on the lower part of specimens is therefore more severe in testing the dripping ability and may aid in predicting the results from full-scale testing. Studying the char stability against melt dripping is important because it increases the burning surface area, which can lead to faster fire spread. The test specimen were the same dimensions as the LOI sticks and were ignited by a Bunsen burner to be classified according to their remaining compound and breakage/ flaming droplets. The flame conditions were the same as in IEC 60332-1 vertical flame test for FR dripping test, with a butane gas flow rate of 650±30 ml/min and air 1000±50 ml/min. The outer part of the blue section of the flame is applied to the lower end of the vertically 18 cm suspended test specimen for 15 seconds and burning times are measured from the time of contact with the flame. If dripping occurs this is reported. The sample weight is measured before and after flame exposure and the remaining sample weight calculated in weight percent.

**B. Materials used**

**Component A)**

"EMA" is a copolymer of ethylene and methyl acrylate (weight ratio = 75:25) having a $MFR_2$ of 0.4 g/10 min and a density of 944 kg/$m^3$, commercially available from DuPont (USA) under the name Elvaloy® AC 1125.

**Component B)**

"LLDPE-MAH" is a linear low density polyethylene grafted with maleic acid anhydride (maleic acid anhydride content = 0.5 to 1.0 wt.-%, $MFR_2$ = 2.0 g/10 min, density = 930 kg/$m^3$), commercially available from HDC Hyundai EP Co., Ltd. under the tradename Polyglue® GE300C.

**Component C)**

"OMS-1" is a masterbatch containing 50 wt.-% of an organo modified siloxane in 50 wt.-% in a LDPE matrix, commercially available from Evonik Nutrition & Care GmbH (Germany) as Tegomer® 6264.

"PDMS-1" is a masterbatch containing a high molecular weight polydimethylsiloxane mixed into LDPE, commercially available from DuPont as DOW CORNING™ AMB-12235 MASTERBATCH.

"PDMS-2" is a masterbatch consisting of 40 wt.-% ultrahigh molecular weight polydimethyl siloxane polymer available from Dow Corning and 60 wt.-% ethylene butyl acrylate copolymer having a butyl acrylate content of 13 wt.-% and a $MFR_2$ of 0.3 g/10 min, commercially available from Borealis AG (Austria) as FR4897.

**Component D)**

"MDH-1" is a brucite (ground magnesium hydroxide) (Ecopiren® 3.5C) produced and commercially available by Europiren B.V (Netherlands) having a *dso* of 3.5 μm, a specific surface area in the range of 7 to 10 $m^2$/g and is coated with 2 wt.-% of stearic acid. The chemical composition is: $Mg(OH)_2$ > 92.8 wt.-%, CaO < 2,3 wt.-%, $SiO_2$ < 1.3 wt.-% and $Fe_2O_3$ < 0.13 wt.-%.

**Component E)**

"VLDPE-1" is a very low density copolymer of polyethylene and 1-octene having a density of 883 kg/$m^3$ and a

$MFR_2$ of 1.1 g/10 min, commercially available as Queo 8203 from Borealis AG (Austria).

"VLDPE-2" is a very low density copolymer of polyethylene and 1-octene having a density of 883 $kg/m^3$ and a $MFR_2$ of 3.0 g/10 min, commercially available as Queo 8201 from Borealis AG (Austria).

## Further components

"Mica" is a potassium aluminium silicate, commercially available as Micafort SX 300 from Mocayco.

AO1 is a high molecular weight sterically hindered phenolic antioxidant, commercially available from BASF SE as Irganox 1010.

## C) Preparation of the polymer compositions

The polymer compositions according to the inventive examples (IE1 to IE10 and for comparative examples (CE1 and CE2) were produced by mixing the components together in a BUSS-co-kneader (46 mm) at a screw speed of 225 rpm and at a set temperature of 180°C in zone 1 and 160°C in zone 2. The mixer screw was heated to 120°C. The extruder screw temperature was 160°C, the barrel heated to 170°C and the speed 4 rpm. Component C) was always added in port 2, while all other components were added in port 1. The amounts of the different components in the polymer compositions and the properties of the polymer compositions according to the inventive examples and the comparative examples can be gathered from below Tables 1a and 1b.

**Table 1a:** Composition and properties of the polymer compositions.

| **component** | **Unit** | **CE1** | **IE1** | **IE2** | **IE3** | **IE4** | **IE5** |
|---|---|---|---|---|---|---|---|
| EMA (A) | wt.-% | - | 29.8 | 21.8 | 19.8 | 17.8 | 13.8 |
| LLDPE-MAH (B) | wt.-% | 4 | 4 | 4 | 4 | 4 | 4 |
| OMS-1 (C) | wt.-% | 3 | 3 | 3 | 3 | 3 | 3 |
| MDH-1 (D) | wt.-% | 63 | 63 | 63 | 63 | 63 | 63 |
| VLDPE-1 (E) | wt.-% | 29.8 | - | 8 | 10 | 12 | 16 |
| AO1 | wt.-% | 0.2 | 0.2 | 0.2 | 0.2 | 0.2 | 0.2 |
| **Properties** | | | | | | | |
| LOI | % | 35.0 | 44.5 | 49.0 | 46.0 | 52.0 | 49.0 |
| Dripping | - | yes | no | no | no | yes | yes |
| Remaining sample | wt.-% | 57 | 75 | 61 | 73 | 53 | 60 |
| Tensile Strength | MPa | 10.6 | 8.9 | 10.6 | 8.8 | 11.1 | 12.1 |
| Elongation at Break | % | 200 | 128 | 173 | 278 | 203 | 195 |

**Table 1b**: Composition and properties of the polymer compositions.

| **Component** | **Unit** | **CE2** | **IE6** | **IE7** | **IE8** | **IE9** | **IE10** |
|---|---|---|---|---|---|---|---|
| EMA (A) | wt.-% | 24.8 | 16.8 | 23.3 | 20.3 | 23.3 | 20.3 |
| LLDPE-MAH (B) | wt.-% | 4 | 4 | 4 | 4 | 4 | 4 |
| OMS-1 (C) | wt.-% | - | 3 | - | 3 | - | 3 |
| PDMS-1 (C) | wt.-% | - | - | 1.5 | 1.5 | - | - |
| PDMS-2 (C) | wt.-% | - | - | - | - | 1.5 | 1.5 |
| MDH-1 (D) | wt.-% | 63 | 63 | 63 | 63 | 63 | 63 |
| VLDPE-1 (E) | wt.-% | - | 10 | - | - | - | - |
| VLDPE-2 (E) | wt.-% | 8 | - | 8 | 8 | 8 | 8 |
| Mica | wt.-% | - | 3 | - | - | - | - |

(continued)

| Component | Unit | CE2 | IE6 | IE7 | IE8 | IE9 | IE10 |
|---|---|---|---|---|---|---|---|
| AO1 | wt.-% | 0.2 | 0.2 | 0.2 | 0.2 | 0.2 | 0.2 |
| **Properties** | | | | | | | |
| LOI | % | 31.5 | 45.0 | 37.5 | 54.5 | 47.5 | 43.5 |
| Dripping | - | no | no | yes | yes | no | yes |
| Remaining sample | wt.-% | 51 | 75 | 40 | 31 | 61 | 0 |
| Tensile Strength | MPa | n.d. | 9.4 | n.d. | 9.7 | n.d. | n.d. |
| Elongation at Break | % | n.d. | 180 | n.d. | 12.7 | n.d. | n.d. |
| $MFR_2$ | g/10 min | n.d. | 7.0 | n.d. | 9.1 | n.d. | n.d. |
| *n.d.= not determined.* | | | | | | | |

**D) Discussion of the results**

The polymer composition according to Comparative Example CE1 is containing only component E) (= a very low density copolymer of polyethylene and 1-octene) as polymer base, but does not contain component A) (= a copolymer of ethylene and methyl acrylate). As can be gathered from Table 1a the polymer compositions according to the invention (IE1 to IE5) have compared to the polymer composition according to CE1 better flame retardant properties.

From Table 1b can be seen that component C) has a very positive effect on the flame retardant properties. Even if the polymer composition according to CE2 comprises component A) as polymer base the flame retardant properties of the polymer compositions according the inventive examples IE6 to IE10 are much better. The comparison of inventive example IE6 with the remaining inventive examples shows that the addition of mica is significantly increasing the char strength, the polymer composition acceding to IE6 shows the highest remaining sample weight.

**Claims**

**1.** A flame retardant polymer composition comprising at least the following components

A) 2.0 to 49.8 wt.-% based on the overall weight of the polymer composition of a copolymer comprising ethylene units and units selected from the group consisting of methyl acrylate, methyl methacrylate and mixtures thereof;
B) 0.1 to 6.0 wt.-% based on the overall weight of the polymer composition of a polyethylene and/or polypropylene containing units originating from maleic acid anhydride;
C) 0.1 to 5.0 wt.-% based on the overall weight of the polymer composition of a silicone fluid and/or a silicon gum;
D) 50.0 to 70.0 wt.-% based on the overall weight of the polymer composition of a magnesium hydroxide; and
E) 0 to 17.0 wt.-% based on the overall weight of the polymer composition of a copolymer of ethylene and a $C_4$ to $C_{10}$ alpha olefin comonomer having a density in the range of 860 $kg/m^3$ to 965 $kg/m^3$ determined according to ISO 1183;

wherein the weight proportions of components A) to E) add up to 100 wt.-%.

**2.** The flame retardant polymer composition according to claim 1, **characterized in that**,
component A) is a copolymer comprising and preferably consisting of ethylene units and methyl acrylate units, more preferably the content of methyl acrylate units is in the range of 10 to 35 wt.-% and preferably in the range of 20 to 30 wt.-% based on the overall weight of component A); and/or
component A) has a density determined according to ISO 1183 in the range of 920 to 960 $kg/m^3$ and preferably in the range of 935 to 950 $kg/m^3$; and/or
component A) has a $MFR_2$ determined according to ISO 1133 in the range of 0.1 to 10 g/10 min and preferably in the range of 0.2 to 0.7 g/10 min; and/or
component A) comprise units with hydrolysable silane-groups, wherein the units with hydrolysable silane-groups are preferably represented by formula (I):

$$R^1SiR^2_qY_{3-q} \qquad (I)$$

wherein
$R^1$ preferably is an ethylenically unsaturated hydrocarbyl, hydrocarbyloxy or (meth)acryloxy hydrocarbyl group, each $R^2$ preferably is independently an aliphatic saturated hydrocarbyl group, Y which may be the same or different, is preferably a hydrolysable organic group and q is 0, 1 or 2.

3. The flame retardant polymer composition according to claim 1 or 2, **characterized in that**,
component B) is a obtained by copolymerising and/or grafting polyethylene with maleic acid anhydride, whereby a grafted linear low density polyethylene is preferred, more preferably the content of maleic acid anhydride is in the range of 0.3 to 2.0 wt.-%; and/or
component B) has a density determined according to ISO 1183 in the range of 910 to 950 kg/$m^3$ and preferably in the range of 920 to 940 kg/$m^3$, and/or
component B) has a $MFR_2$ determined according to ISO 1133 in the range of 0.5 to 5 g/10 min and preferably in the range of 1.5 to 2.5 g/10 min.

4. The flame retardant polymer composition according to any one of the preceding claims, **characterized in that**,
component C) is a silicone fluid or silicone gum selected from the group consisting of polysiloxane, preferably polydimethylsiloxane, and siloxanes containing alkoxy or alkyl functional groups and mixtures thereof, preferably component C) is an organomodified siloxane.

5. The flame retardant polymer composition according to any one of the preceding claims, **characterized in that**,
component D) is a ground or precipitated magnesium hydroxide, preferably is a ground magnesium hydroxide, more preferably is a ground magnesium hydroxide having a median particle size $d_{50}$ in the range of 1.0 to 10.0 $\mu$m, preferably in the range of 2.0 to 5.0 $\mu$m and still more preferably is a ground magnesium hydroxide surface-treated with stearic acid, preferably the content of stearic acid is 1.0 to 3.0 wt.-% and more preferably 1.5 to 2.5 wt.-% based on the weight of the ground magnesium hydroxide.

6. The flame retardant polymer composition according to any one of the preceding claims, **characterized in that**,
component D) is a ground or precipitated magnesium hydroxide having a BET surface area in the range of 1 to 20 $m^2$/g and preferably in the range of 5 to 12 $m^2$/g.

7. The flame retardant polymer composition according to any one of the preceding claims, **characterized in that**,
component E) is a copolymer of ethylene and 1-octene; whereby said copolymer preferably has
a density in the range of 870 kg/$m^3$ to 910 kg/$m^3$, preferably in the range of 870 to 900 kg/$m^3$ and more preferably in the range of 880 to 890 kg/$m^3$ measured according to ISO 1183; and/or
an $MFR_2$ in the range of 0.1 to 10.0 g/10 min, preferably in the range of 0.5 to 5 g/10 min, more preferably in the range of 0.5 to 3 g/10 min and still more preferably in the range of 1.0 to 3.0 g/10 min measured according to ISO 1133 at 190°C and a load of 2.16 kg; and/or
component E) is a copolymer consisting of units of ethylene and 1-hexene, wherein the content of 1-hexene is in the range of 0.02 to 15.0 wt.-% and preferably in the range of 0.5 to 5.0 wt.-% based on the overall weight of component E), preferably the density of said copolymer is in the range a density in the range of 920 kg/$m^3$ to 965 kg/$m^3$, more preferably in the range of 930 to 960 kg/$m^3$ and stilled more preferably in the range of 945 to 955 kg/$m^3$ measured according to ISO 1183 and/or the $MFR_2$ is in the range of 2.0 to 40.0 g/10 min, preferably in the range of 3.0 to 30.0 g/10 min, more preferably in the range of 4.0 to 20.0 g/10 min and still more preferably in the range of 5.0 to 15.0 g/10 min measured according to ISO 1133 at 190°C and a load of 21.6 kg.

8. The flame retardant polymer composition according to any one of the preceding claims, **characterized in that**,
component E) is manufactured by using a single-site catalyst and preferably is a copolymer of ethylene and 1-octene manufactured by using a single-site catalyst.

9. The flame retardant polymer composition according to any one of the preceding claims, **characterized in that**,
the content of component A) in the polymer composition is in the range of 7.5 to 40.5 wt.%, preferably in the range of 15.5 to 32 wt.-% and more preferably in the range of 19.8 to 26.7 wt.-% based on the overall weight of the polymer composition; and/or
the content of component B) in the polymer composition is in the range of 1.0 to 5.0 wt.%, preferably in the range of 2.0 to 4.5 wt.-% and more preferably in the range of 3.9 to 4.1 wt.-% based on the overall weight of the polymer composition; and/or

the content of component C) in the polymer composition is in the range of 0.5 to 4.5 wt.%, preferably in the range of 1.0 to 4 wt.-% and more preferably in the range of 1.4 to 3.1 wt.-% based on the overall weight of the polymer composition; and/or
the content of component D) in the polymer composition is in the range of 55.0 to 67.0 wt.%, preferably in the range of 60.0 to 66.0 wt.-% and more preferably in the range of 62.0 to 64.0 wt.-% based on the overall weight of the polymer composition; and/or
the content of component E) in the polymer composition is in the range of 3.0 to 16.0 wt.%, preferably in the range of 5.0 to 10.0 wt.-%, more preferably in the range of 6 to 10 and still more preferably in the range of 6.0 to 9.0 wt.-% based on the overall weight of the polymer composition.

**10.** The polymer composition according to any one of the preceding claims, **characterized in that**, the polymer composition comprises at least one additive, preferably selected from the group consisting of slip agents, UV-stabiliser, antioxidants, additive carriers,
nucleating agents, mica and mixtures thereof, whereby these additives preferably are present in 0.01 to 5 wt.-% and more preferably in 0.1 to 4 wt.-% based on the overall weight of the polymer composition, still more preferably the polymer composition comprises mica, more preferably in 2.5 to 3.5 wt,.% based on the overall weight of the polymer composition.

**11.** The polymer composition according to any one of the preceding claims, **characterized in that**, the weight ratio between components A) and E) is in the range from 0.8:1 to 4.0:1, preferably in the range from 1.8:1 to 3.0:1 and more preferably in the range from 1.9:1 to 2.8:1.

**12.** The polymer composition according to any one of the preceding claims, **characterized in that**, the polymer composition comprises at least the following components:

A) 15.5 to 32.0 wt.-% and preferably 19.8 to 26.7 wt.-% based on the overall weight of the polymer composition of a copolymer comprising and preferably consisting of ethylene units and units of methyl acrylate, more preferably having a density determined according to ISO 1183 in the range of 920 to 960 kg/$m^3$ and preferably in the range of 935 to 950 kg/$m^3$ and/or a $MFR_2$ determined according to ISO 1133 in the range of 0.1 to 5 g/10 min and preferably in the range of 0.2 to 0.7 g/10 min;
B) 2.0 to 4.5 wt.-% and preferably 3.9 to 4.1 wt.-% based on the overall weight of the polymer composition of a linear low density polyethylene grafted with maleic anhydride;
C) 1.0 to 4.0 wt.-% and preferably 1.4 to 3.1 wt.-% based on the overall weight of the polymer composition of a silicone fluid and/or a silicon gum, preferably selected from the group consisting of polysiloxane, more preferably polydimethylsiloxane, and siloxanes containing alkoxy or alkyl functional groups and mixtures thereof;
D) 60.0 to 66.0 wt.-% and preferably 62.0 to 64.0 wt.-% based on the overall weight of the polymer composition of a ground magnesium hydroxide having a median particle size $d_{50}$ in the range of 1.5 to 5.0 $\mu$m and preferably in the range of 3.0 to 4.0 $\mu$m; and
E) 5.0 to 10.0 wt.-% and preferably 6.0 to 9.0 wt.-% based on the overall weight of the polymer composition of a copolymer made of ethylene and 1-octene; whereby said copolymer preferably has a density in the range of 870 to 900 kg/$m^3$ measured according to ISO 1183 and/or an $MFR_2$ in the range of 0.5 to 5 g/10 min;

wherein the weight proportions of components A) to E) add up to 100 wt.-%.

**13.** A wire or cable comprising at least one layer comprising the polymer composition according to any one of claims 1 to 12.

**14.** The wire or cable according to claim 13, **characterized in that**, the wire ore cable comprises an insulation layer, preferably comprising or consisting of a material selected from the group consisting of crosslinked or thermoplastic polyethylenes, thermoplastic polypropylenes or flame retardant polyolefins.

**15.** Use of a polyolefin composition according to any one of claims 1 to 12 as a flame retardant layer of a wire or cable.

Europäisches Patentamt
European Patent Office
Office européen des brevets

# EUROPEAN SEARCH REPORT

Application Number
EP 19 21 3848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 403 190 A (HONGLONGJIANG ORIENT SCIENCE & TECHNOLOGY CO LTD ET AL.) 11 March 2015 (2015-03-11) * example 4 * ----- | 1-15 | INV. C08L23/08 C08K5/00 |
| X | CN 108 203 546 A (SHANGHAI ORIGINALDOW ADVANCED COMPOUNDS CO LTD) 26 June 2018 (2018-06-26) * example 6 * ----- | 1-15 | |

TECHNICAL FIELDS SEARCHED (IPC)
C08L
C08K

The present search report has been drawn up for all claims

1

| Place of search | Date of completion of the search | Examiner |
|---|---|---|
| Munich | 12 March 2020 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 21 3848

This annex lists the patent family members relating to the patent documents cited in the above-mentioned European search report. The members are as contained in the European Patent Office EDP file on
The European Patent Office is in no way liable for these particulars which are merely given for the purpose of information.

12-03-2020

| Patent document cited in search report | Publication date | Patent family member(s) | Publication date |
|---|---|---|---|
| CN 104403190 A | 11-03-2015 | NONE | |
| CN 108203546 A | 26-06-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2007049090 A1
- EP 0530940 A1
- EP 2275477 A1
- EP 2072572 A1
- EP 2532707 A1
- WO 9905688 A1
- WO 2014121804 A1
- WO 0112708 A1
- WO 2005023924 A1
- EP 1254923 A1
- WO 2005003199 A1
- EP 0449939 A1
- WO 2013159942 A2
- WO 2007137711 A1
- WO 20131599442 A2

### Non-patent literature cited in the description

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **CASTIGNOLLES, P. ; GRAF, R. ; PARKINSON, M. ; WILHELM, M. ; GABORIEAU, M.** *Polymer,* 2009, vol. 50, 2373
- **A.J. BRANDOLINI ; D.D. HILLS.** NMR spectra of polymers and polymer additives. Marcel Deker Inc, 2000